# EUROPEAN PATENT SPECIFICATION

(11) **EP 1 762 435 B1**
(45) Date of publication and mention of the grant of the patent: **03.12.2008**
(21) Application number: 06017480.2
(22) Date of filing: 22.08.2006
(51) Int. Cl.: B60R 5/04

(54) **Lid apparatus**
Deckeleinrichtung
Dispositif de couvercle

(30) Priority: 12.09.2005 JP 2005263346
(43) Date of publication of application: 14.03.2007
(73) Proprietor: Honda Motor Co., Ltd., Tokyo 107-8556 (JP)
(72) Inventor: Yamase, Shinichi, c/o Honda R & D Co., Ltd., Saitama 351-0193 (JP); Emi, Yukio, c/o Honda R & D Co., Ltd., Saitama 351-0193 (JP)
(74) Representative: Trossin, Hans-Jürgen

(56) References cited:
- DE-A1- 10 261 393
- DE-C1- 10 225 889
- GB-A- 2 410 223
- US-B1- 6 290 277

## Description

### BACKGROUND OF THE INVENTION

### Field of the Invention

The present invention relates to a lid apparatus according to the preamble of claim 1.

### Description of the Related Art

In a known example of a structure for covering a recessed portion formed in a floor of a vehicle, step portions are formed in upper and lower portions of the wall of the recessed portion, so as to selectively dispose a lid on the upper or lower step portion (see Japanese Unexamined Patent Application, First Publication No. JP-A-10044872). In this case, the position of the lid can be changed between the upper and lower positions.

In the above structure, although the position of the lid can be changed between the upper and lower positions, a passenger must raise or lower the lid using both hands in order to change the position of the lid, since the lid is an inconveniently large size.

Document US-B1-6 290 277 discloses prior art relevant to the present invention, in particular a cargo system for a vehicle having a floor,a seat that folds and forms a cargo surface. The cargo system includes a cargo platform provided with a front edge. The cargo platform is connectable to the vehicle for movement between a lowered position with the front edge being located under a portion of the seat and a raised position with the cargo platform being generally aligned with the cargo surface of the seat thereby forming an upper tier and a lower tier.

Moreover, the prior art defining the preamble of claim 1 is given in DE 102 25 889C.

### SUMMARY OF THE INVENTION

It is an object of the present invention to provide a lid apparatus with an additional support for its lid in the upper position, where the lid closes the recessed portion in the vehicle floor.

This object is solved by a lid apparatus according to claim 1.

An embodiment of the present invention provides a lid apparatus (e.g., a lid apparatus 11 in an embodiment explained later) having a lid (e.g., a lid 15 in the embodiment) for selectively closing a recessed portion (e.g., a recessed portion 14 in the embodiment) formed in a floor (e.g., a floor 12 in the embodiment) of a vehicle, wherein the lid comprises:
a main body (e.g., a main body 30 in the embodiment) for selectively closing an opening (e.g., an opening 28 in the embodiment) of the recessed portion; and
a coupling part (e.g., a coupling part 31 in the embodiment), one end of which is provided rotatably at the substantially vertical middle of a wall part (e.g., a front wall part 44 in the embodiment) along the depth of the recessed portion, and the other end of which is provided rotatably at the main body.

In accordance with the above structure, the main body of the lid can move while rotating the coupling part with respect to the wall part of the recessed portion and the main body, where one end of the coupling part is rotatably attached using the attachment part to the wall part in the vertical middle thereof, and the other end of the coupling part is also rotatable with respect to the main body. As the main body is coupled to a vertically middle position of the wall part via the coupling part, the coupled side of the main body is guided by the coupling part and rotates with a specific locus. In accordance with the above structure in which the main body of the lid is coupled to the wall part of the recessed portion and the coupled side moves with the specific locus, the lid can be moved using only one hand, and the position switching can be easily performed.

In a typical example, the coupling part is movable between a first position at which the main body closes the opening of the recessed portion and a second position at which the main body is disposed on a bottom part of the recessed portion.

In this case, the main body is switched between two positions: one position is for closing the opening of the recessed portion, and the other position is for disposing the main body on the bottom part of the recessed portion, thereby easily performing position switching of the lid. That is, it is possible to easily switch the state of the lid between a first state in which the lid closes the opening, and a second state in which the effective space in the recessed portion is maximum.

According to the present invention there is provided
a protruding portion (e.g., a protruding portion 50 in the embodiment) for supporting the main body which is provided at the wall part in the vicinity of the opening of the recessed portion, where the protruding portion protrudes toward the inside of the recessed portion; wherein
the coupling part has an insertion opening (e.g., an insertion opening 63 in the embodiment) into which the protruding portion can be detachably inserted.

In the case, during the process of closing the opening of the recessed portion using the main body by rotating the coupling part, the protruding portion (protruding toward the inside of the recessed portion) of the wall member in the vicinity of the opening is inserted into the insertion opening, and then the main body is supported by the protruding portion. Therefore, the main body can be supported by the protruding portion even in the structure in which the main body is coupled to the wall part via the coupling part.

Also in the case, a rotatable lid part (e.g., a rotatable lid part 65 in the embodiment) is provided at the insertion opening.

Accordingly, the insertion opening can be closed with the lid part except when the protruding portion is inserted into the insertion opening. Therefore, it is possible to obtain an appealing appearance.

Additionally, the protruding portion may have an engaging part (e.g., a lock member 53 in the embodiment), and an engaged part (e.g., an engagement protruding portion 64 in the embodiment) engageable with the engaging part is provided at the insertion opening.

In this case, during the process of closing the opening of the recessed portion with the main body while rotating the coupling part, the protruding portion (protruding toward the inside of the recessed portion) of the wall member in the vicinity of the opening is inserted into the corresponding insertion opening of the coupling part, and the engaged part formed in the insertion opening of the coupling part is locked by the engaging part provided at the protruding portion, so that the engaging part is engaged with the engaged part. That is, when the coupling part is rotated so as to close the opening with the main body, the coupling part can be automatically locked by the protruding portion.

It is possible that:
a plurality of the protruding portions are provided;
the coupling part has a protrusion (e.g., a protrusion 70 in the embodiment) in the vicinity of said the other end thereof, wherein when the main body closes the opening of the recessed portion, the protrusion is positioned between any two of the protruding portions and protrudes toward the inside of the recessed portion, thereby supporting the main body.

In this case, when the opening of the recessed portion is closed with the main body by rotating the coupling part, the main body can also be supported by the protrusion of the coupling part, which is formed between the protruding portions and in the vicinity of the other end of the coupling part, and protrudes toward the inside of the recessed portion. When the main body is positioned on the bottom side of the recessed portion and thus the coupling part is exposed, this protrusion protrudes on the back side; thus, the passenger cannot see it. Therefore, it is possible to obtain an appealing appearance.

In a preferable example:
an attachment part (e.g., an attachment part 32 in the embodiment) having a fittable hole (e.g., an fittable hole 37 in the embodiment) is coupled to said one end of the coupling part;
the wall part has a temporary attachment portion (e.g., a fittable bracket 25 in the embodiment); and
the attachment part is temporarily attached to the wall part by inserting the temporary attachment portion of the wall part into the fittable hole of the attachment part.

In this case, the temporary attachment portion provided at the wall part is inserted into the fittable hole of the attachment part (toward the one end of the coupling part of the lid), so that the attachment part is temporarily attached to the wall part. Therefore, the lid can be easily attached to the wall part.

### BRIEF DESCRIPTION OF THE DRAWINGS

Fig. 1 is a perspective view of a lid apparatus as an embodiment in accordance with the present invention, viewed from the back of a relevant vehicle, so as to show a state in which a recessed portion is covered with a lid.
Fig. 2 is a perspective view of the lid apparatus in the embodiment, also viewed from the back of the vehicle, so as to show a state in which the recessed portion is not covered with the lid, and the lid is contained in the recessed portion.
Fig. 3 is a partially-enlarged perspective view showing a part where the lid is attached in the lid apparatus in the embodiment.
Fig. 4 is a partial side sectional view showing a front portion of the lid apparatus of the embodiment, along the front-back direction of the vehicle.
Fig. 5 is also a partial side sectional view showing a front portion of the lid apparatus of the embodiment, along the front-back direction of the vehicle.
Fig. 6 is also a partial side sectional view showing a front portion of the lid apparatus of the embodiment, along the front-back direction of the vehicle.
Fig. 7 is a partially-enlarged perspective view showing a front portion of the lid apparatus of the embodiment, along the front-back direction of the vehicle.
Fig. 8 is also a partially-enlarged perspective view showing a front portion of the lid apparatus of the embodiment, along the front-back direction of the vehicle.
Fig. 9 is a perspective view of the lid apparatus in the embodiment, viewed from the back of the vehicle, so as to show the state in which the recessed portion is covered with the lid.

### DETAILED DESCRIPTION OF THE INVENTION

Hereinafter, an embodiment of the lid apparatus in accordance with the present invention will be described with reference to the appended figures.

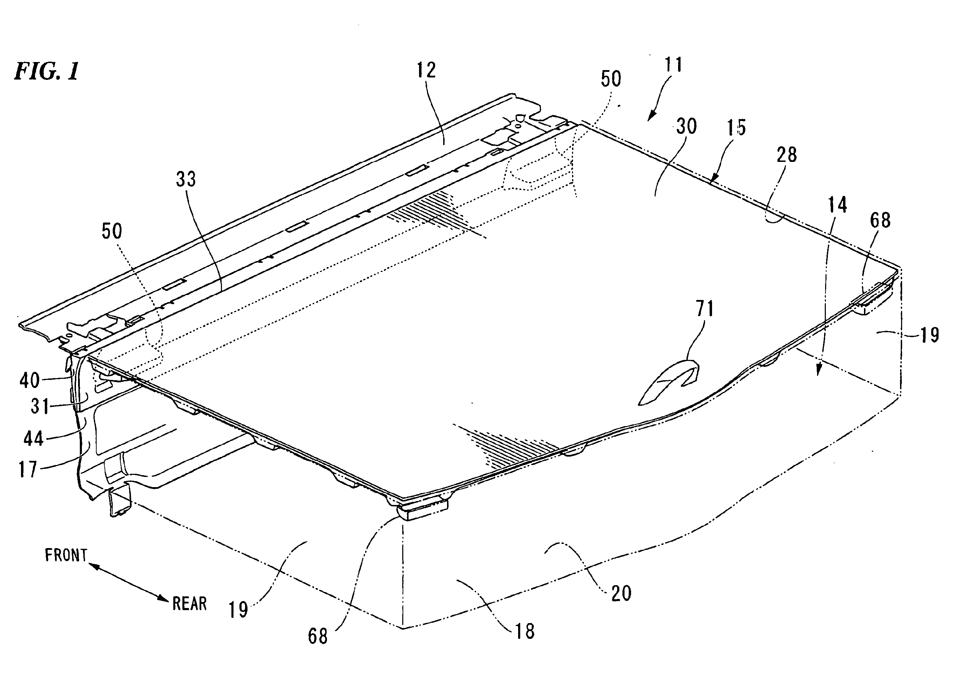

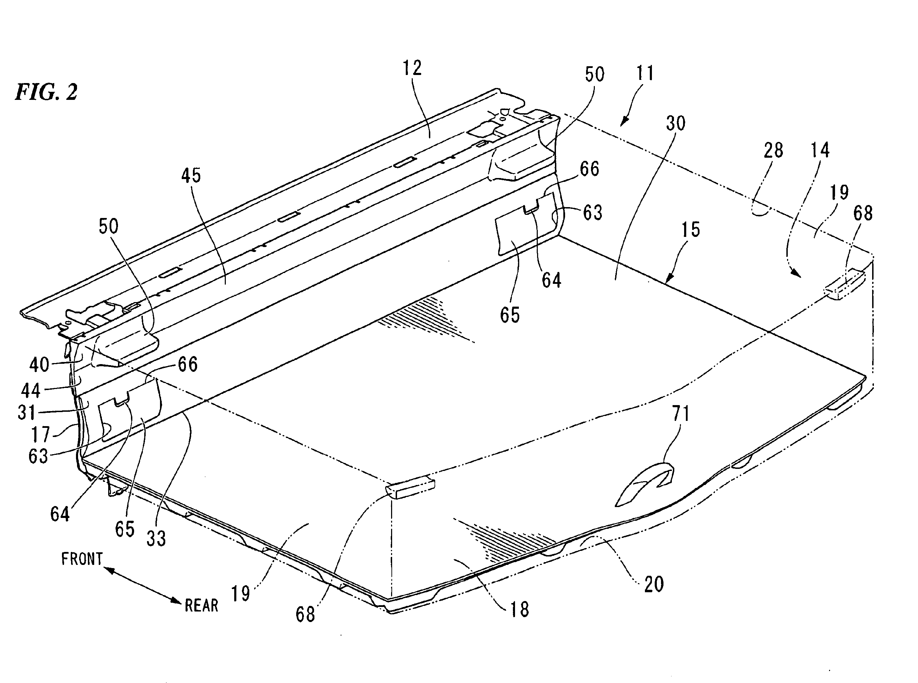

A lid apparatus 11 of the present embodiment has a lid 15 for covering a recessed portion 14 which is formed in a floor 12 of a luggage compartment at the back side of a vehicle. The recessed portion 14 is recessed downward from the floor surface, and can contain luggage, or the like. As shown in Fig. 2, the recessed portion 14 includes (i) a front wall base part 17 closer to the front of the vehicle, provided substantially vertically and substantially along the width of the vehicle, (ii) a rear wall part 18 closer to the back of the vehicle, provided substantially vertically and substantially along the width of the vehicle, (iii) a pair of side wall parts 19 provided substantially vertically and substantially along the front-back direction of the vehicle, wherein each side wall part 19 connects the same sides (along the width of the vehicle) of the front wall base part 17 and the rear wall part 18, and (iv) a bottom part 20 (see Fig. 1) for joining lower ends of the front wall base part 17, the rear wall part 18, and the pair of the side wall parts 19 to each other in a substantially horizontal plane.

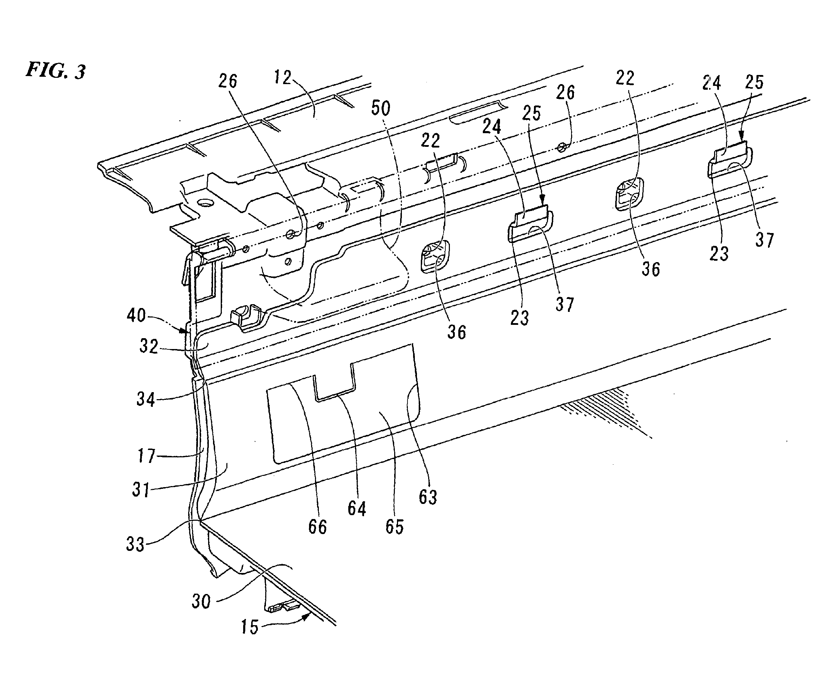

As shown in Fig. 3, the front wall base part 17 of the recessed portion 14 has a plurality of attachment holes 22 which are aligned along the width of the vehicle. Between adjacent attachment holes 22, a fittable bracket 25 (as a temporary attachment portion) is formed, which has a base plate part 23 extending toward the inside of the recessed portion 14, and a bracket part 24 protruding upward from the head of the base plate part 23. Therefore, each fittable bracket 25 having a hook form protrudes toward the inside of the recessed portion 14. As shown in Fig. 3, in the front wall base part 17, attachment holes 26 are also formed above the attachment holes 22 and the fittable brackets 25.

The lid 15 has (i) a main body 30 (see Fig. 1) having a substantially rectangular form for closing an upper opening 28 of the recessed portion 14, (ii) a coupling part 31 (see Fig. 2) having a rectangular plate shape, in which one longer-side end of the coupling part 31 is rotatably arranged at the front wall base part 17 of the recessed portion 14, and the other longer-side end is rotatably arranged at the main body 30, (iii) an attachment part 32 (see Fig. 3) having a substantially plate shape, which is coupled to the one longer-side end of the coupling part 31 and is attached to the wall base part 17 of the recessed portion 14.

The lid 15 is integrally molded using a resin, that is, the main body 30, the coupling part 31, and the attachment part 32 are integrally molded. Here, the main body 30 and the coupling part 31 are joined to each other via a thin part 33 which is thinner than these elements and is thus flexible. Therefore, the main body 30 and the coupling part 31 rotate with respect to each other when this thin part 33 deforms. Similarly, the coupling part 31 and the attachment part 32 are joined to each other via a thin part 34 which is thinner than these elements and is thus flexible. Therefore, the coupling part 31 and the attachment part 32 rotate with respect to each other when this thin part 34 deforms. That is, the main body 30 and the coupling part 31 form a resin hinge which rotates around the thin part 33, and similarly, the coupling part 31 and the attachment part 32 form a resin hinge which rotates around another thin part 34. These rotation centers (i.e., the lines of the thin parts 33 and 34) are parallel to each other.

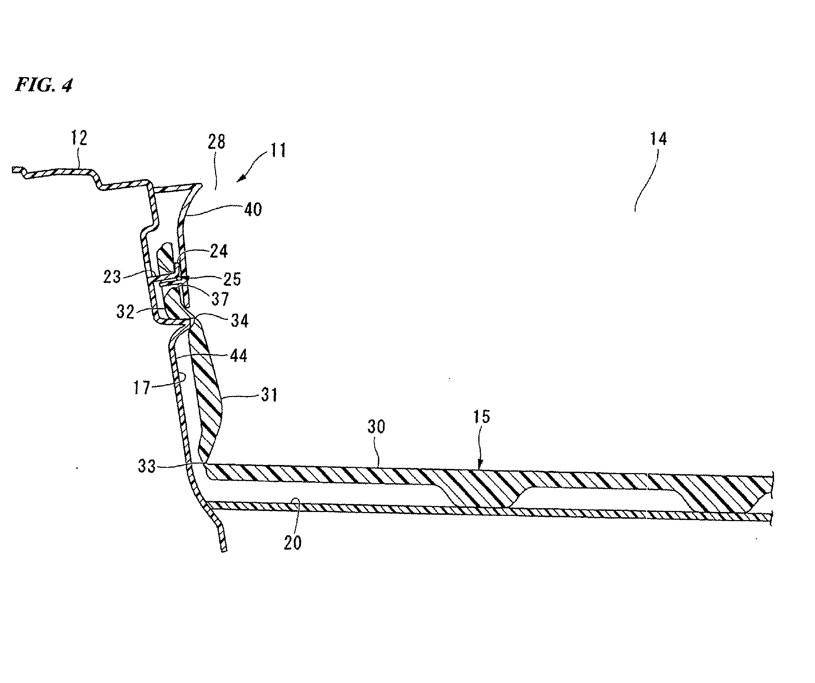

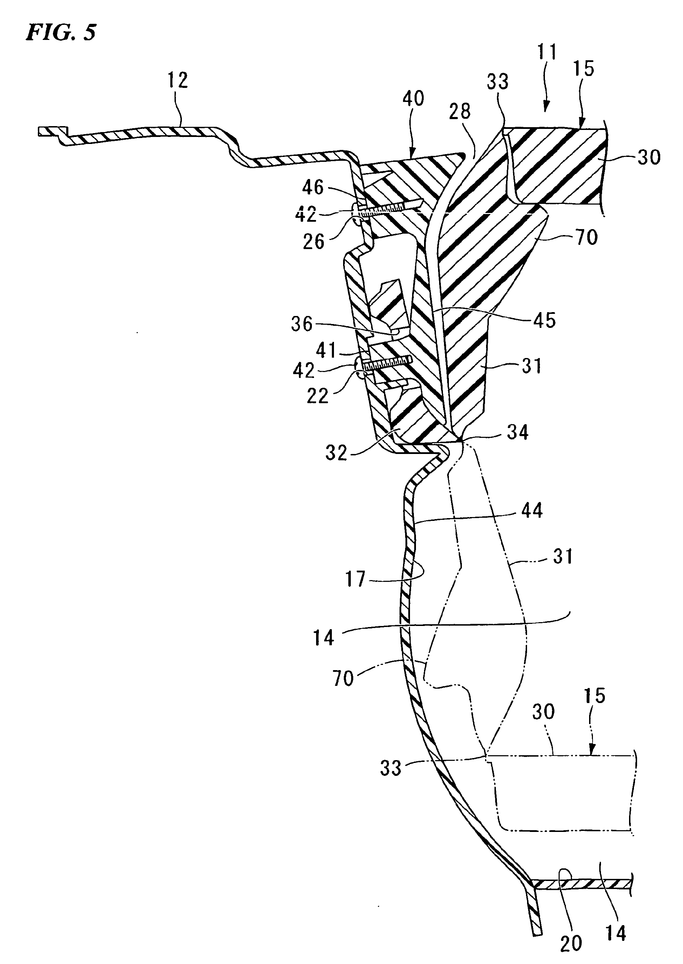

The attachment part 32 of the lid 15 has a plurality of attachment holes 36, each having a substantially square shape, which are aligned along the length of the attachment part 32. Between adjacent attachment holes 36, a fittable hole 37 having a substantially rectangular shape is formed, which is elongated along the length of the attachment part 32. The attachment part 32 of the lid 15 is temporarily attached to the front wall base part 17 by (i) positioning the attachment part 32 along the width of the vehicle, (ii) inserting each fittable bracket 25 of the front wall base part 17 to the corresponding fittable hole 37 of the attachment part 32, and after that, (iii) disposing each fittable hole 37 on the base plate part 23 of the corresponding fittable bracket 25 (see Fig. 4). In this temporary attachment state, the position of each attachment hole 36 of the attachment part 32 coincides with the position of the corresponding attachment hole 22 of the front wall base part 17 (see Fig. 3). Into the attachment hole 36 of the attachment part 32, a corresponding fittable part 41 of a front wall member 40 (see Fig. 5) is inserted, and a screw 42, which is inserted through the attachment hole 22 from the back side of the front wall base part 17, is screwed into the fittable part 41, thereby fastening the fittable part 41 to the front wall base part 17. Accordingly, the attachment part 32 is attached to the front wall base part 17 in a manner such that the attachment part 32 is supported between the front wall base part 17 and the front wall member 40 which is fastened to the front wall base part 17. In the lid 15 attached to the front wall base part 17 as discussed above, the part of the coupling part 31 to be attached to the front wall base part 17, that is, the thin part 34 toward the attachment part 32, is horizontally arranged at the substantially vertical center of the front wall base part 17.

Also in the lid 15 attached to the front wall base part 17 as discussed above, the main body 30 is vertically moved by rotating the attachment part 32 and the coupling part 31 around the thin part 34 therebetween, and also by rotating the coupling part 31 and the main body 30 around the thin part 33 therebetween.

The front wall member 40 has a substantially rectangular plate shape, and covers the attachment part 32 of the lid 15 and an upper portion of the front wall base part 17 when it is attached to the front wall base part 17. The upper end of the front wall member 40 has substantially the same height as that of the surface of the floor 12 of the luggage compartment. Accordingly, the recessed portion 14 has a front wall part 44, the lower portion of which is formed by the above-described front wall base part 17, and the upper portion of which is formed by the front wall member 40. The one longer-side end of the coupling part 31 of the lid 15 is rotatably provided in the vertical middle of the front wall part 44 (i.e., along the depth of the recessed portion 14).

The front wall member 40 has (i) a main body 45 having a substantially rectangular plate shape, (ii) the above-described fittable part 41 protruding from the back side of the main body 45, and (iii) an attachment base 46 protruding backward from the upper portion of the main body 45. Into the attachment base 46, the screw 42, which is inserted into each upper attachment hole 26 of the front wall base part 17 from the back side thereof, is screwed, thereby fastening the front wall member 40 to the front wall base part 17 also via the attachment base 46.

As shown in Fig. 2, in the front side (toward the recessed portion 14) of the front wall member 40, a plurality of protruding portions 50 (specifically, two portions) are formed in the vicinity of the opening 28 of the recessed portion 14, where the protruding portions 50 are separated from each other along the width of the vehicle, and protrude toward the inside of the recessed portion 14.

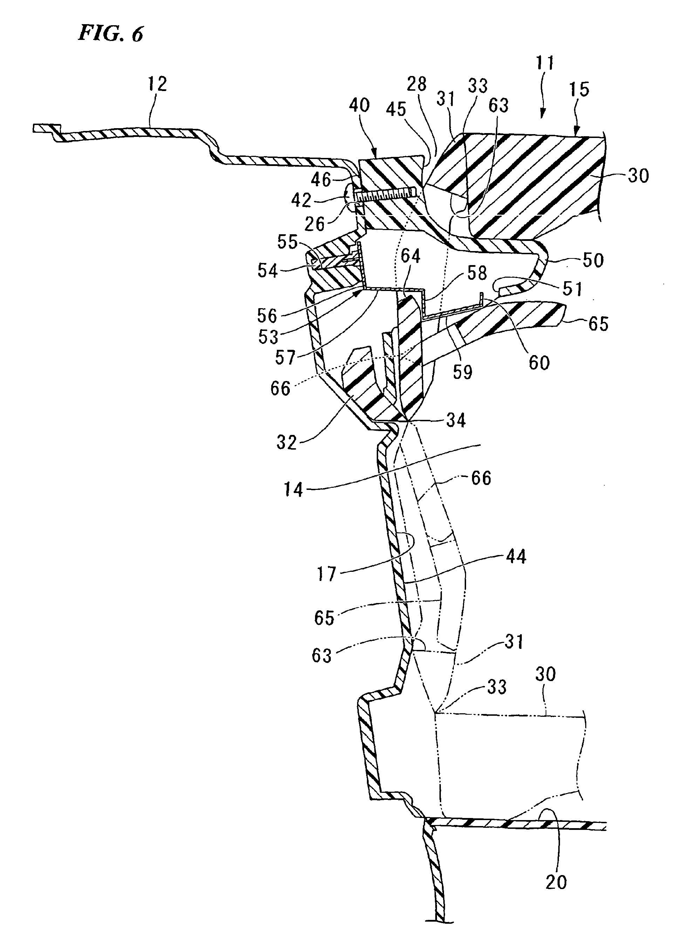

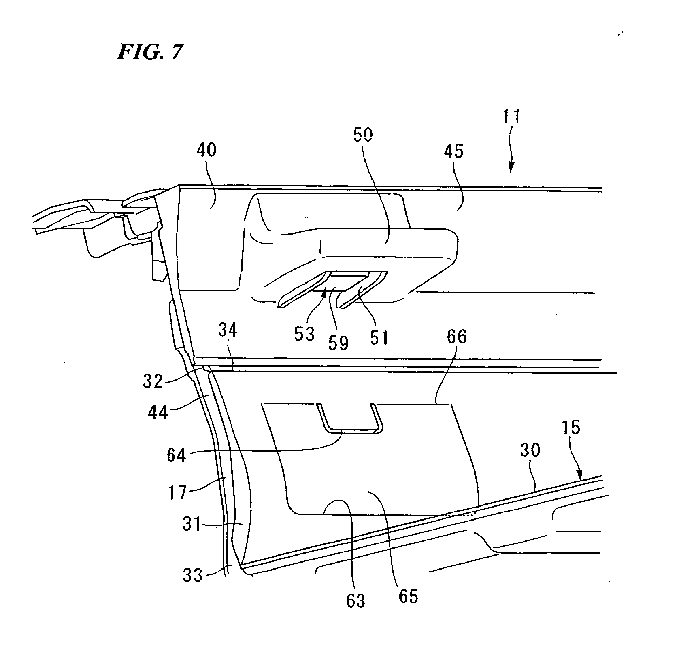

As shown in Fig. 6, the upper surface of each protruding portion 50 is arranged substantially horizontally, and the lower surface thereof is slightly inclined in a manner such that the closer to the head, the higher its position. A groove part 51 (see Fig. 7) is formed in the middle of the lower surface along the width of the vehicle. In this groove part 51, a lock member 53 (i.e., an engaging part) made of resin or metal is provided, which is elastically deformable. As shown in Fig. 6, this lock member 53 has (i) an attachment plate part 56 having a fittable part 54 which fits into the attachment hole 55 so that the attachment plate part 56 is attached to the front wall base part 17, (ii) an extending plate part 57 extending substantially horizontally from the lower end of the attachment plate part 56 toward the inside of the recessed portion 14, (iii) a fittable plate part 58 extending substantially vertically downward from the head of the extending plate part 57, (iv) an inclined plate part 59 extending from the lower end of the fittable plate part 58 toward the inside of the recessed portion 14 in an inclined manner such that the closer to the head, the higher its position, and (v) a head plate part 60 extending upward from the head of the inclined plate part 59.

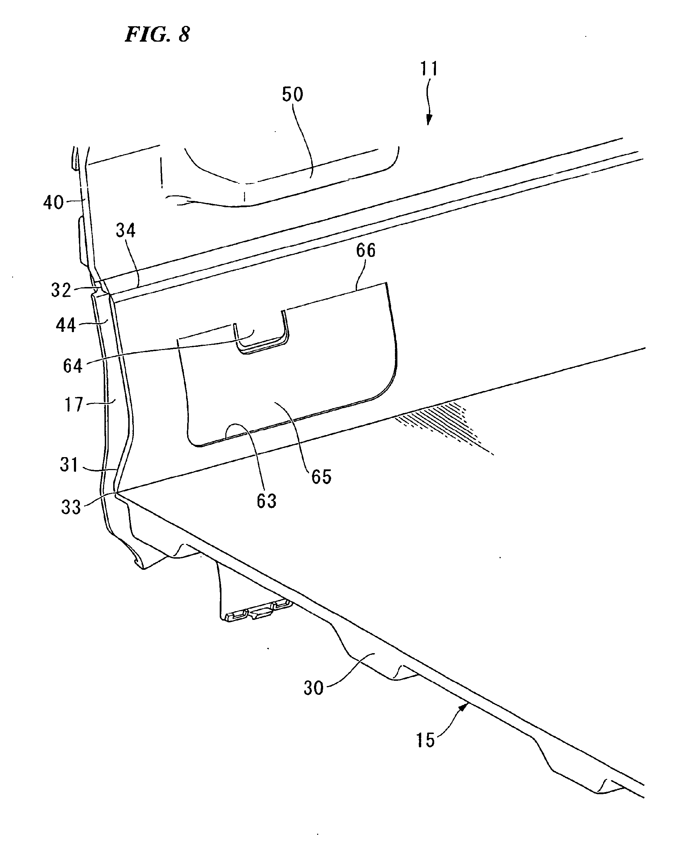

In the coupling part 31 of the lid 15, insertion openings 63 are formed, into which the corresponding protruding portions 50 can be inserted when the coupling part 31 rotates upward, where the position of each insertion opening 63 coincides with the corresponding protruding portion 50 and the protruding portion 50 can also be detached from the insertion opening 63. As also shown in Figs. 7 and 8, in the middle of a side end of the insertion opening 63 which faces the attachment part 32, an engagement protruding portion 64 (i.e., an engaged part) is formed, which protrudes toward the inside of the insertion opening 63. In addition, a lid part 65 for opening or closing the insertion opening 63 is rotatably coupled via a thin part 66 (arranged along the width of the vehicle) to the above side end of the insertion opening 63, except for the part where the engagement protruding portion 64 is provided. The above insertion opening 63 including the engagement protruding portion 64 and the lid part 65 are formed by cutting the coupling part 31 at boundaries of these elements, except for the thin part 66. The boundary portions which surround the lid part 65 are inclined depending on the directions of the cutting, so that the lid part 65 can protrude from the insertion opening 63 and open only in a direction which allows insertion of the protruding portion 50. In addition, an elastic force of the thin part 66 forces the lid part 65 to close the insertion opening 63. When the coupling part 31 rotates downward (i.e., opposite to the protruding portion 50), the lid part 65 makes contact with the front wall base part 17 which pushes the lid part 65, thereby positioning the lid part 65 so as to close the insertion opening 63. In this state, the lid part 65 defined by the above-described inclined boundaries does not protrude toward the inside of the recessed portion 14 from the coupling part 31.

When the main body 30 of the lid 15 is moved upward while rotating the coupling part 31 (see Fig. 6, explaining switching from the state indicated by alternate long and two short dashed lines to the state indicated by solid lines), the lid part 65 of the coupling part 31 makes contact with the head side of the protruding portion 50 so that the lid part 65 rotates while opposing the force applied from the thin part 66. In this state, the coupling part 31 approaches the main body 45 of the front wall member 40 while the protruding portion 50 is inserted into the insertion opening 63. Accordingly, the end (opposite to the end where the engagement protruding portion 64 is provided) of the insertion opening 63 is positioned above the upper surface of the protruding portion 50. In the final process of the above rotation of the coupling part 31, the engagement protruding portion 64 of the insertion opening 63 makes contact with the inclined plate part 59 of the lock member 53, and pushes it upward. This pushing operation is released when the engagement protruding portion 64 reaches the position of the extending plate part 57. Accordingly, the lock member 53 is restored from the elastically deformed form to the original form, and the fittable plate part 58 overlaps vertically with and thus is substantially parallel to the engagement protruding portion 64, thereby allowing an engagement for restricting the engagement protruding portion 64 to move toward the inside of the recessed portion 14. That is, the engagement protruding portion 64, which can engage with the lock member 53 provided at the protruding portion 50, is provided at the insertion opening 63. In this state, one side end of the main body 30 of the lid 15 toward the coupling part 31 is disposed on the upper surfaces of the protruding portions 50 and is thus supported by the protruding portions 50, while the opposite side end of the main body 30 is disposed on and supported by mounts 68 (see Fig. 1) formed at the upper end of the rear wall part 18, that is, in the vicinity of the opening 28. The mounts 68 protrude toward the inside of the recessed portion 14. Accordingly, the main body 30 of the lid 15 closes the opening 28 of the recessed portion 14, and forms the same plane together with the floor 12 of the luggage compartment. Here, the plurality of the mounts 68 of the rear wall part 18 are aligned along the width of the vehicle.

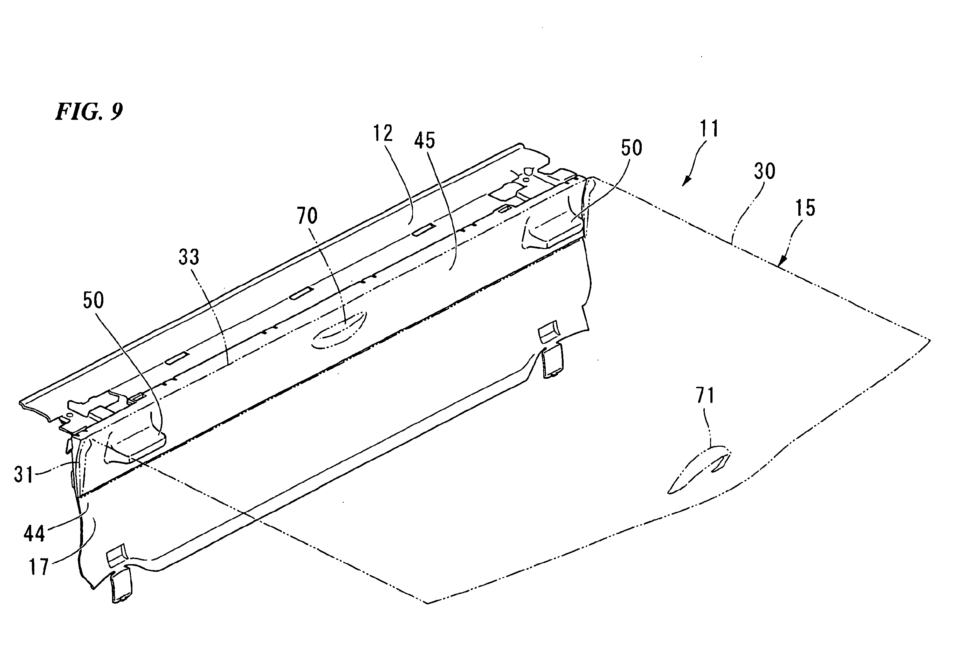

As shown in Figs. 5 and 9, on one side of the coupling part 31 of the lid 15 toward the main body 30, a protrusion (or protruding portion) 70 is formed at the center between the protruding portions 50. When the main body 30 closes the opening 28 of the recessed portion 14, the one side end of the main body 30 of the lid 15 toward the coupling part 31 is disposed on this protrusion 70, which protrudes toward the inside of the recessed portion 14.

In addition, on the upper surface of the main body 30 of the lid 15, a handle 71 (see Fig. 1) having a belt-like form is provided at the center along the width of the vehicle on the side opposite to the coupling part 31.

The process of switching from the state in which the opening 28 of the recessed portion 14 is closed by the lid 15 to the state in which the opening 28 is not closed and the lid 15 is contained in the recessed portion 14 will be explained. As shown in Figs. 1, 5, and 6, the initial state is such that the main body 30 is disposed on (i) the upper surfaces of the protruding portions 50 which protrude from the front wall member 40, (ii) the upper surface of the protrusion 70 of the coupling part 31, and (iii) the upper surfaces of the mounts 68 which protrude from the rear wall part 18 of the recessed portion 14. From this state, a passenger of the vehicle releases each engagement between the lock member 53 and the engagement protruding portion 64 by pushing upward the inclined plate part 59 of the lock member 53 while raising the main body 30 using the handle 71, and slightly moving the main body 30 forward. Next, when the passenger pulls the main body 30 backward and simultaneously raises the back side thereof, the main body 30 rotates with respect to the coupling part 31 around the thin part 33, and simultaneously the coupling part 31 rotates with respect to the front wall part 44. Accordingly, the main body 30 of the coupling part 31 is separated from the protruding portions 50 and the protrusion 70 toward the back side of the vehicle, and then the one side end of the main body 30 toward the coupling part 31 is lowered with a locus, the radius of which corresponds to the coupling part 31, so that the coupling part 31 approaches the lower portion of the front wall base part 17 of the recessed portion 14. In this state, when the passenger lowers the main body 30, the other side (opposite to the coupling part 31) of the main body 30 descends without interfering with the mounts 68 of the rear wall part 18 due to the inclined main body 30, so that the main body 30 is disposed on the bottom part 20 of the recessed portion 14. Accordingly, as shown in Fig. 2 and 4, the recessed portion 14 is not closed and opens upward. During the above-described rotation of the coupling part 31, the lid part 65 of the coupling part 31 is separated from the corresponding protruding portion 50, and thus closes the insertion opening 63 due to the elastic force of the thin part 66 and the pushing force received from the front wall base part 17 (see Figs. 7 and 8). In addition, when the coupling part 31 rotates downward, the protrusion 70 of the coupling part 31 is positioned on the back side, that is, it faces the front wall base part 17, and thus it is not exposed toward the inside of the recessed portion 14.

On the other hand, when closing the opening 28 from the above open state, the passenger raises the other side of the main body (i.e., the side opposite to the coupling part 31) using the handle 71 while maintaining the position of the coupling part 31. When this other side is raised above the mounts 68 of the rear wall part 18, the passenger then pulls the handle 71 toward the back of the vehicle so as to raise the one side (toward the coupling part 31) of the main body 30. Accordingly, this side toward the coupling part 31 rises with a locus having a radius which corresponds to the coupling part 31 while rotating the coupling part 31. The passenger then pushes the main body 30 toward the front of the vehicle so that the protruding portions 50 are inserted into the corresponding insertion openings 63, and each engagement protruding portion 64 is locked by the corresponding lock member 53, thereby locking the coupling part 31 at the protruding portions 50. After that, when the side having the handle 71 of the main body 30 is lowered, the main body 30 is disposed on and supported by (i) the upper surfaces of the protruding portions 50 which protrude from the front wall member 40, (ii) the upper surface of the protrusion 70 of the coupling part 31, and (iii) the upper surfaces of the mounts 68 which protrude from the rear wall part 18 of the recessed portion 14, thereby closing the opening 28 of the recessed portion 14.

In accordance with the lid apparatus 11 of the present embodiment, the main body 30 of the lid 15 can move while rotating the coupling part 31 with respect to the front wall part 44 of the recessed portion 14 and the main body 30, where one end of the coupling part 31 is rotatably attached using the attachment part 32 to the front wall part 44 in the vertical middle thereof, and the other end of the coupling part 31 is also rotatable with respect to the main body 30. As the main body 30 is coupled to a vertically middle position of the front wall part 44 via the coupling part 31, the coupled side of the main body 30 is guided by the coupling part 31 and rotates with a specific locus. In accordance with the above structure in which the main body 30 of the lid 15 is coupled to the front wall part 44 of the recessed portion 14 and the coupled side moves with the specific locus, the lid 15 can be moved using only one hand, and the switching between the upper and lower positions can be easily performed.

In addition, one side of the coupling part 31 toward the attachment part 32 is arranged rotatably at the vertically substantial center of the front wall part 44 of the recessed portion 14, and thus the main body 30 is switched between two positions interposing the vertically substantial center of the front wall part 44: one position is for closing the opening 28 of the recessed portion 14, and the other position is for disposing the main body 30 on the bottom part 20 of the recessed portion 14. That is, it is possible to easily switch the state of the lid 15 between a first state in which the lid 15 closes the opening 28 and forms the same plane together with the floor 12 of the luggage compartment, and a second state in which the effective space in the recessed portion 14 is maximum.

During the process of closing the opening 28 of the recessed portion 14 using the main body 30 by rotating the coupling part 31, the protruding portions 50 of the front wall member 40 in the vicinity of the opening 28 are inserted into the corresponding insertion openings 63, and then the one side of the main body 30 toward the coupling part 31 is supported by the protruding portions 50. Therefore, the main body 30 can be supported by the protruding portions 50 even in the structure in which the main body 30 is coupled to the front wall part 44 via the coupling part 31.

In addition, the rotatable lid part 65 is provided at the insertion opening 63; thus, the insertion opening 63 can be closed with the lid part 65 except when the protruding portion 50 is inserted into the insertion opening 63. Therefore, it is possible to obtain an appealing appearance.

Additionally, during the process of closing the opening 28 of the recessed portion 14 with the main body 30 while rotating the coupling part 31, the protruding portions 50 of the front wall member 40 in the vicinity of the opening 28 are inserted into the corresponding insertion openings 63 of the coupling part 31, and the engagement protruding portion 64 formed in each insertion opening 63 is locked by the corresponding lock member 53 provided at each protruding portion 50, so that each lock member 53 is engaged with the corresponding engagement protruding portion 64. That is, when the coupling part 31 is rotated so as to close the opening 28 with the main body 30, the coupling part 31 can be automatically locked by the protruding portions 50.

Furthermore, when the opening 28 of the recessed portion 14 is closed with the main body 30 by rotating the coupling part 31, the main body 30 can also be supported by the protrusion 70 of the coupling part 31, which is formed between the protruding portions 50 and in the vicinity of the main body 30, and protrudes toward the inside of the recessed portion 14. When the main body 30 is positioned on the bottom side of the recessed portion 14 and thus the coupling part 31 is exposed, this protrusion 70 protrudes on the back side (i.e., toward the front of the vehicle); thus, the passenger cannot see it. Therefore, it is possible to obtain an appealing appearance.

In addition, in the attachment of the lid 15, the fittable brackets 25 provided at the front wall part 44 are inserted into the fittable holes 37 of the attachment part 32 (toward the one side of the coupling part 31 of the lid 15), so that the attachment part 32 is temporarily attached to the front wall part 44. Therefore, the lid 15 can be easily attached to the front wall part 44.

Additionally, the groove part 51 and the lock member 53 are provided on the lower surface of each protruding portion 50; thus, they cannot be easily seen by passengers, thereby producing an appealing appearance.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

For example, in the above embodiment, the main body 30, the coupling part 31, and the attachment part 32 of the lid 15 are integrally molded. However, at least one of the main body 30 and the attachment part 32 may be molded as a body separated from the coupling part 31, and be coupled to the coupling part 31 after the molding.

Also in the above embodiment, the coupling part 31 is coupled to the vertically substantial center position of the front wall part 44. However, this is not a limiting condition, and the coupling part 31 may be coupled to a higher position (from the center) of the front wall part 44. In this case, even when the lid 15 is set to the lower position, a space is produced below the lid 15 in the recessed portion 14.

## Claims

1. A lid apparatus (11) having a lid (15) for selectively closing a recessed portion (14) formed in a floor (12) of a vehicle, wherein the lid comprises:
a main body (30) for selectively closing an opening (28) of the recessed portion; and
a coupling part (31), one end of which is provided rotatably at the substantially vertical middle of a wall part (44) along the depth of the recessed portion, and the other end of which is provided rotatably at the main body,
**characterized in that** a protruding portion (50) for supporting the main body is provided at the wall part in the vicinity of the opening of the recessed portion, where the protruding portion protrudes toward the inside of the recessed portion; and
the coupling part has an insertion opening (63) into which the protruding portion can be detachably inserted.

2. The lid apparatus in accordance with claim 1, **characterized in that** the coupling part is movable between a first position at which the main body closes the opening of the recessed portion and a second position at which the main body is disposed on a bottom part of the recessed portion.

3. The lid apparatus in accordance with claim 1, **characterized in that** a rotatable lid part (65) is provided at the insertion opening.

4. The lid apparatus in accordance with any one of claims 1 to 3, **characterized in that** the protruding portion has an engaging part (53), and an engaged part (64) engageable with the engaging part is provided at the insertion opening.

5. The lid apparatus in accordance with any one of claims 1 to 4, **characterized in that**:
a plurality of the protruding portions are provided,
the coupling part has a protrusion (70) in the vicinity of said the other end thereof, wherein when the main body closes the opening of the recessed portion, the protrusion is positioned between any two of the protruding portions and protrudes toward the inside of the recessed portion, thereby supporting the main body.

6. The lid apparatus in accordance with any one of claims 1 to 5, **characterized in that**:
an attachment part (32) having a fittable hole (37) is coupled to said one end of the coupling part;
the wall part has a temporary attachment portion (25); and
the attachment part is temporarily attached to the wall part by inserting the temporary attachment portion of the wall part into the fittable hole of the attachment part.

## Patentansprüche

1. Deckelvorrichtung (11), welche einen Deckel (15) zum wahlweisen Schließen eines vertieften Abschnitts (14) aufweist, der in einem Boden (12) eines Fahrzeugs ausgebildet ist, wobei der Deckel umfasst:
einen Hauptkörper (30) zum wahlweisen Schließen einer Öffnung (28) des vertieften Abschnitts und
ein Verbindungsteil (31), von dem ein Ende drehbar an der im Wesentlichen vertikalen Mitte eines Wandteils (44) entlang der Tiefe des vertieften Abschnitts vorgesehen ist, und von dem das andere Ende drehbar an dem Hauptkörper vorgesehen ist,
**dadurch gekennzeichnet, dass** ein hervorstehender Abschnitt (50) zum Halten des Hauptkörpers an dem Wandteil in der Nähe der Öffnung des vertieften Abschnitts vorgesehen ist, wo der hervorstehende Abschnitt in Richtung der Innenseite des vertieften Abschnitts hervorsteht, und das Verbindungsteil eine Einsatzöffnung (63) aufweist, in die der hervorstehende Abschnitt abnehmbar eingesetzt werden kann.

2. Deckelvorrichtung nach Anspruch 1,
**dadurch gekennzeichnet, dass** das Verbindungsteil bewegbar ist zwischen einer ersten Position, bei der der Hauptkörper die Öffnung des vertieften Abschnitts verschließt und einer zweiten Position, bei der der Hauptkörper auf einem Bodenteil des vertieften Abschnitts angeordnet ist.

3. Deckelvorrichtung nach Anspruch 1,
**dadurch gekennzeichnet, dass** ein drehbares Deckelteil (65) an der Einsatzöffnung vorgesehen ist.

4. Deckelvorrichtung nach einem der Ansprüche 1 bis 3,
**dadurch gekennzeichnet, dass** der hervorstehende Abschnitt ein eingreifendes Teil (53) aufweist und ein Eingriffsteil (64) an der Einsatzöffnung vorgesehen ist, welches in Eingriff mit dem eingreifenden Teil bringbar ist.

5. Deckelvorrichtung nach einem der Ansprüche 1 bis 4,
**dadurch gekennzeichnet, dass** eine Mehrzahl von den hervorstehenden Abschnitten vorgesehen sind, das Verbindungsteil einen Vorsprung (70) in der Nähe des anderen Endes davon aufweist, wobei, wenn der Hauptkörper die Öffnung des vertieften Abschnitts verschließt, der Vorsprung zwischen beliebigen zwei der vorspringenden Abschnitte positioniert ist und in Richtung der Innenseite des vertieften Abschnitts hervorsteht und **dadurch** den Hauptkörper hält.

6. Deckelvorrichtung nach einem der Ansprüche 1 bis 5,
**dadurch gekennzeichnet, dass** ein Befestigungsteil (32), das ein einpassbares Loch (37) aufweist, mit dem einen Ende des Verbindungsteils verbunden ist, das Wandteil einen temporären Befestigungsabschnitt (25) aufweist und das Befestigungsteil durch Einsetzen des temporären Befestigungsabschnitts des Wandteils in das einpassbare Loch des Befestigungsteils temporär an der Wand befestigt ist.

## Revendications

1. Dispositif de couvercle (11) comprenant un couvercle (15) destiné à fermer de manière sélective une partie en retrait (14) formée dans le plancher (12) d'un véhicule, dans lequel le couvercle comprend :
un corps principal (30) destiné à fermer de manière sélective une ouverture (28) de la partie en retrait ; et
une partie d'accouplement (31), dont une extrémité est aménagée de manière à pouvoir tourner sur la moitié essentiellement verticale d'une partie de paroi (44) le long de la profondeur de la paroi en retrait, et dont l'autre extrémité est aménagée de manière à pouvoir tourner sur le corps principal,
**caractérisé en ce** :
une partie en saillie (50) destinée à supporter le corps principal est aménagée sur la partie de paroi à proximité de l'ouverture de la partie en retrait, dans laquelle la partie en saillie est en saillie vers l'intérieur de la partie en retrait ; et
la partie d'accouplement comprend une ouverture d'introduction (63) à l'intérieur de laquelle la partie en saillie peut être introduite de manière amovible.

2. Dispositif de couvercle selon la revendication 1, **caractérisé en ce que** la partie d'accouplement peut se déplacer entre une première position dans laquelle le corps principal ferme l'ouverture de la partie en retrait et une seconde position dans laquelle le corps principal est disposé sur une partie de fond de la partie en retrait.

3. Dispositif de couvercle selon la revendication 1, **caractérisé en ce qu'**une partie de couvercle pouvant tourner (65) est aménagée sur l'ouverture d'introduction.

4. Dispositif de couvercle selon l'une quelconque des revendications 1 à 3, **caractérisé en ce que** la partie en saillie comprend une partie d'engagement (53), et une partie à engagement (64) qui peut s'engager avec la partie d'engagement est aménagée sur l'ouverture d'introduction.

5. Dispositif de couvercle selon l'une quelconque des revendications 1 à 4, **caractérisé en ce que** :
il est aménagé une pluralité de parties en saillie ;
la partie d'accouplement comprend une saillie (70) située à proximité de ladite autre extrémité de celle-ci, dans laquelle lorsque le corps principal ferme l'ouverture de la partie en retrait, la saillie est positionnée entre l'une quelconque des deux parties en saillie et est en saillie vers l'intérieur de la partie en retrait, ce qui permet de supporter le corps principal.

6. Dispositif de couvercle selon l'une quelconque des revendications 1 à 5, **caractérisé en ce que** :
une partie de fixation (32), qui comprend un orifice pouvant s'ajuster (37), est accouplée à ladite une extrémité de la partie d'accouplement ;
la partie de paroi comprend une partie de fixation temporaire (25) ; et
la partie de fixation est fixée temporairement à la partie de paroi en introduisant la partie de fixation temporaire de la partie de paroi à l'intérieur de l'orifice pouvant s'ajuster de la partie de fixation.
